# EUROPEAN PATENT APPLICATION

(11) **EP 4 718 550 A1**
(43) Date of publication of application: **01.04.2026**
(21) Application number: 25189284.0
(22) Date of filing: 14.07.2025
(51) Int. Cl.: H01M 10/04, H01M 50/471, H01M 50/474, H01M 50/477, H01M 50/486, H01M 50/489, H01M 50/595

(54) **BATTERY TAPE AND BATTERY TAPING METHOD**

(30) Priority: 26.09.2024 KR 20240131129
(71) Applicant: SAMSUNG SDI CO., LTD., Yongin-si, Gyeonggi-do 17084 (KR)
(72) Inventor: HUR, Sangdo, 17084 Yongin-Si (KR)
(74) Representative: Marks & Clerk LLP

(57) **Abstract**

A battery tape is disclosed. The battery tape includes a first member having a position relative to a first surface of a battery and a second member extending from a side of the first member, surrounding a side surface of the battery, and bonded to a second surface of the battery opposite to the first surface. The first member may be configured to shrink and contact the first surface of the battery based on exposing the first member to first heat, and the second member may be configured to shrink and contact the side surface of the battery based on exposing the second member to second heat.

## Description

### BACKGROUND

### 1. FIELD

Aspects of embodiments of the present disclosure relate to a battery tape and a battery taping method.

### 2. DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In particular, in a case where batteries are mounted on small, portable electronic devices, etc., battery tapes may be attached and mounted onto the devices. The battery tapes may help prevent or reduce the chance of the batteries moving within the electronic devices and may help prevent or reduce the chance of the batteries being separated from the electronic devices even when the electronic devices are dropped.

The attachment location of the battery tape may vary, which may cause the battery to move when the electronic device is dropped, depending on the attachment location of the battery tape. The quality of the electronic device may deteriorate when the battery moves after the device is dropped.

The above information disclosed in this Background section is for enhancement of understanding of the background of the present disclosure, and therefore, it may contain information that does not constitute related (or prior) art.

### SUMMARY

Aspects of embodiments of the present disclosure provide a battery tape and a battery taping method.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

Aspects of embodiments provide a battery tape including a first member having a position relative to a first surface of a battery and a second member extending from a side of the first member, surrounding a side surface of the battery, and bonded to a second surface of the battery opposite to the first surface. The first member may be configured to shrink and contact the first surface of the battery based on exposing the first member to first heat, and the second member may be configured to shrink and contact the side surface of the battery based on exposing the second member to second heat.

According to one embodiment, the first member may include a first base portion and first coating layers stacked on opposite surfaces of the first base portion, and the first base portion includes an anisotropic heat-shrinkable material configured to anisotropically heat-shrink based on being exposed to the first heat.

According to one embodiment, the first member may further include a first printing layer stacked on at least one surface of one of the first coating layers.

According to one embodiment, the second member may include a second base portion and second coating layers stacked on opposite surfaces of the second base portion, and the second base portion includes an anisotropic heat-shrinkable material configured to anisotropically heat-shrink based on being exposed to the second heat.

According to one embodiment, the second member may further include a second printing layer stacked on at least one surface of one of the second coating layers.

According to one embodiment, the second member may further include an adhesive layer formed on at least one surface of one of the second coating layers, and the second member is configured to bond to the second surface by the adhesive layer.

According to one embodiment, based on the first member being exposed to the first heat with the first member spaced apart from the first surface of the battery, the first member is configured to shrink in a first direction and a second direction perpendicular to the first direction for contacting the first surface of the battery.

According to one embodiment, the second member includes a bent portion along the side surface of the battery, wherein at least a portion of the bent portion is configured to bond to the second surface of the battery.

According to one embodiment, based on the second member being exposed to the second heat, the second member is configured to shrink in a first direction and a second direction perpendicular to the first direction for contacting the side surface of the battery.

According to one embodiment, a protection circuit module may be mounted on one side surface of the battery, and the second member is configured to bond to at least a portion of the second surface of the battery and surround the protection circuit module.

According to one embodiment, the first member and the second member may include at least one of polycarbonate (PC), polypropylene (PP), polyethylene (PE), or polyethylene terephthalate (PET).

According to one embodiment, the first heat or the second heat is in a temperature range from approximately 60°C to approximately 70°C.

According to one embodiment, the first member and the second member have a thickness in a range from approximately 20 µm to approximately 50 µm, and are configured to shrink by substantially a same amount in a first direction and a second direction perpendicular to the first direction based on being exposed to respectively the first heat and the second heat.

According to one embodiment, four second members may extend from four sides of the first member, and the second members may be separated from each other and configured to bond to the second surface of the battery.

Aspects of embodiments provide a battery taping method including providing a battery tape including a first member and a second member, positioning the first member relative to a first surface of a battery, bending the second member along a side surface of the battery and bonding at least a portion of the second member to a second surface of the battery, and shrinking the first member and the second member via heat. The first member may shrink and contact the first surface of the battery based on the first member being exposed to first heat, and the second member may shrink and contact the side surface of the battery based on the second member being exposed to second heat.

According to one embodiment, the second member includes a plurality of second members, where the plurality of second members are separated from each other and may be bonded to the second surface of the battery.

According to one embodiment, the heat-shrinking may include positioning the first member to be spaced apart from the first surface of the battery, applying the first heat to the first member for shrinking the first member in a first direction and a second direction perpendicular to the first direction for bringing the first member into contact with the first surface of the battery.

According to one embodiment, the shrinking may include applying the second heat above a preset temperature to the second member that is bent along the side surface of the battery so that at least a portion thereof may be bonded to the second surface of the battery, where applying of the second heat may shrink the second member in a first direction and a second direction perpendicular to the first direction for bringing the second member into contact with the side surface of the battery.

According to one embodiment, the first heat or the second heat may be in temperature range from approximately 60°C to approximately 70°C.

According to one embodiment, the first member and the second member may be formed to a thickness in a range of approximately 20 µm to approximately 50 µm and may shrink by substantially a same amount in a first direction and a second direction perpendicular to the first direction based on being exposed to respectively the first heat and the second heat.

According to various embodiments of the present disclosure, the first member and the second member, which are anisotropic heat-shrinkable films, may be heat-shrunk by receiving heat to eliminate the gap between the battery and the battery tape, thereby preventing the battery from being moved in a case where the electronic device is dropped.

According to various embodiments of the present disclosure, the phenomenon in which the battery tape is wrinkled due to contact between the battery tape and the first surface of the battery due to heat shrinkage may be improved.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view showing a state before a battery is positioned on a battery tape according to an embodiment of the present disclosure.
FIG. 2 shows a state in which a first surface of the battery of FIG. 1 is positioned on the battery tape according to an embodiment of the present disclosure.
FIG. 3 illustrates a plan view showing the battery to which the battery tape is attached according to an embodiment of the present disclosure.
FIG. 4 illustrates a bottom view showing the battery tape according to an embodiment of the present disclosure.
FIG. 5 illustrates a cross-sectional view of a battery tape according to an embodiment of the present disclosure.
FIG. 6A illustrates a side view in an X-axis direction showing a battery to which a battery tape according to an embodiment of the present disclosure is attached before heat shrinkage, which omits a second member extending in the X-axis direction.
FIG. 6B illustrates a side view in an X-axis direction showing a battery to which a battery tape attached according to an embodiment of the present disclosure is attached after heat shrinkage, which omits a second member extending in the X-axis direction.
FIG. 7A illustrates a side view in an Y-axis direction showing a battery to which a battery tape according to an embodiment of the present disclosure is attached before heat shrinkage, which omits a second member extending in the Y-axis direction.
FIG. 7B illustrates a side view in an Y-axis direction showing a battery to which a battery tape attached according to an embodiment of the present disclosure is attached after heat shrinkage, which omits a second member extending in the Y-axis direction.
FIG. 8 illustrates a flowchart of an example battery taping method according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

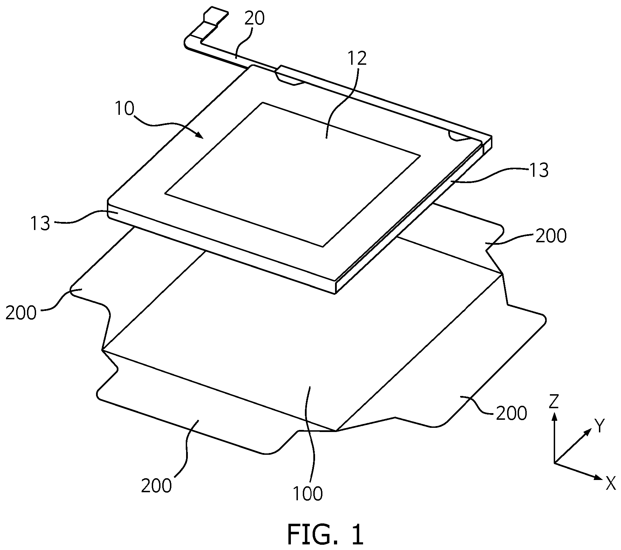

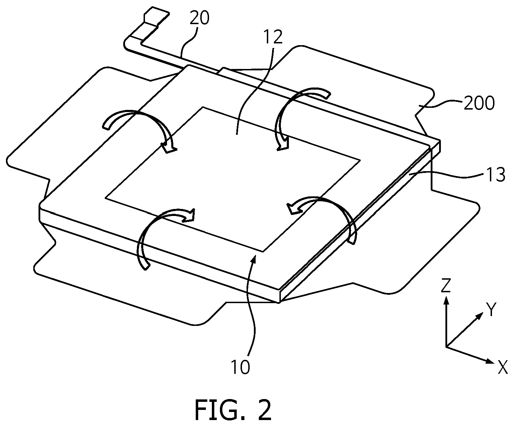

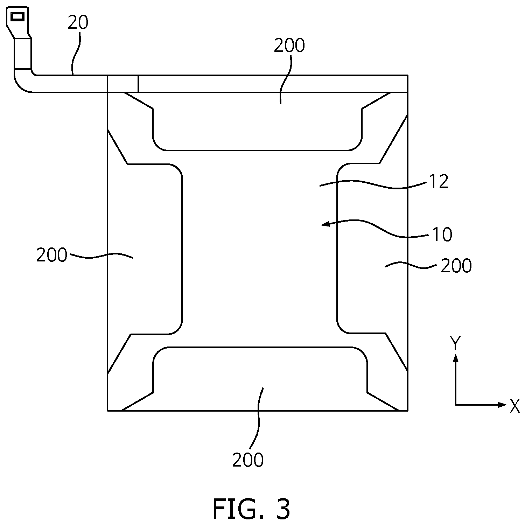

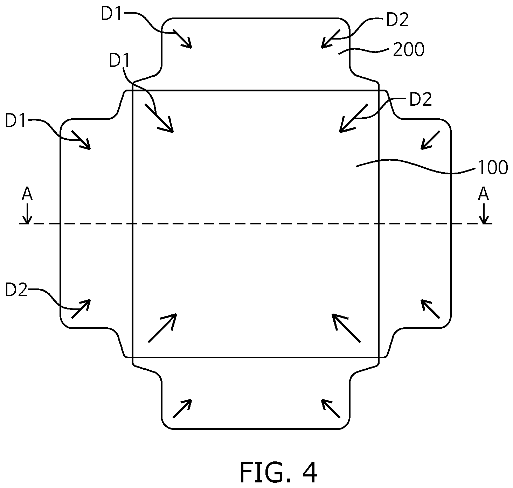

FIG. 1 illustrates a perspective view showing a state before a battery is positioned on a battery tape according to an embodiment of the present disclosure, FIG. 2 shows a state in which a first surface of the battery of FIG. 1 is positioned on the battery tape according to an embodiment of the present disclosure, FIG. 3 illustrates a plan view showing the battery to which the battery tape is attached according to an embodiment of the present disclosure, and FIG. 4 illustrates a bottom view showing the battery tape according to an embodiment of the present disclosure.

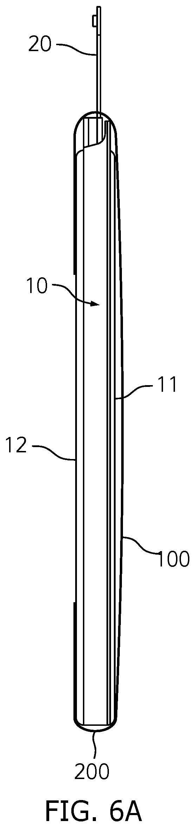

A battery tape according to an embodiment of the present disclosure may include a first member 100 and a second member 200, where the first member 100 and the second member 200 may be anisotropic heat-shrinkable films although embodiments are not limited thereto. For example, the first member 100 and the second member 200 may be implemented using other types of films or materials that may shrink based on the members being exposed to a certain amount of heat. The first member 100 may be positioned on a first surface 11 (FIG. 6A) of a battery 10. For example, the first member 100 may be formed in a rectangular shape. The first member 100 may be formed to correspond to the shape and size of the first surface 11 of the battery 10.

In some embodiments, the first surface 11 of the battery 10 may be a lower surface of a battery 10 as shown in FIG. 6A, but the present disclosure is not limited thereto. The battery 10 may be positioned on the first member 100 with the lower surface of the battery 10 facing or opposite the first member 100.

The second member 200 may extend from the side of the first member 100 and surround a side surface 13 of the battery 10. The second member 200 may be bent along the side surface 13 of the battery 10 so that at least a portion thereof is bonded to a second surface 12 of the battery 10. The second member 200 may extend from four sides of the first member 100 and surround four side surfaces 13 of the battery 10. The second member 200 may be bonded to the second surface 12 of the battery 10 facing or opposite the first surface 11 of the battery 10.

The first surface 11 of the battery 10 may face the second surface 12, and the side surface 13 of the battery 10 may be a surface connecting the first surface 11 and the second surface 12. In order for the second member 200 to have adhesion, an adhesive may be applied onto the second member 200.

Any adhesive that is commonly used may be used without limitation. The adhesive may be an acrylic adhesive. The acrylic adhesive may be selected from polymethyl methacrylate (PMMA), polyethyl methacrylate (PEMA), or polybutyl methacrylate (PBMA).

The second member 200 may be bonded to the second surface 12 of the battery 10 by applying an adhesive onto at least a portion thereof. The second member 200 may be attached to at least a portion of the second surface 12 of the battery 10. In some embodiments, the second surface 12 of the battery 10 may be the upper surface of the battery 10, but the present disclosure is not limited thereto.

The second member 200 extends from the side of the first member 100 and the second member 200 is attached to at least a portion of the battery 10, for further strengthening the bonding between the battery tape and the battery 10.

The second member 200 may have various shapes. Four second members 200 may be formed by extending from the four sides of the first member 100, and the second members 200 may not be in contact with each other when bonded to the second surface 12 of the battery 10. In this regard, in some embodiments, the second members 200 are separated or have a distance or gap with one another. For example, the second member 200 may have one or more round corners and may have a shape that becomes narrower as the distance from the side of the first member 100 increases. However, the shape of the second member 200 is not limited thereto.

The second member 200 may be folded toward the side surface 13 of the battery 10. For example, in an embodiment where four second members 200 are folded while the battery 10 is positioned on the first member 100 as shown in FIG. 2, the second members 200 may not overlap each other as shown in FIG. 3. In an embodiment where the second member 200 is folded while the battery 10 is positioned on the first member 100, the second member 200 may be bonded to the second surface 12 while surrounding the side surface 13 of the battery 10. An adhesive may not be applied onto a portion of the second member 200 surrounding the side surface 13 of the battery 10.

For example, the side surface 13 of the battery 10 may be connected to the first surface 11 and the second surface 12. The first surface 11 may correspond to the lower surface of the battery 10, and the second surface 12 may correspond to the upper surface of the battery 10. In an embodiment where the battery 10 is a hexahedron, the side surface 13 of the battery 10 may include a third surface, a fourth surface, a fifth surface, and a sixth surface that are connected to the first surface 11 and the second surface 12. The third surface may face the fifth surface, and the fourth surface may face the sixth surface. In some embodiments, the second member 200 may be bonded to a portion of the second surface 12 while surrounding the third surface, the fourth surface, the fifth surface, and the sixth surface.

The first member 100 and the second member 200 may be anisotropic heat-shrinkable films. The second member 200 may be attached to at least a portion of the second surface 12 of the battery 10, and the first member 100 may be positioned spaced apart from the first surface 11 of the battery 10. In an embodiment where the first member 100 is supplied with heat while being positioned spaced apart from the first surface 11 of the battery 10, the first member 100 may shrink in a first direction D1 and a second direction D2 perpendicular to the first direction D1 and come into contact with the first surface 11 of the battery 10.

For example, the first direction D1 may refer to a direction inclined at an angle of about 45° with respect to the boundary line between the first member 100 and the second member 200. The second direction D2 may refer to a direction that is perpendicular to the first direction D1 and is inclined at an angle of about 45° with respect to the boundary line between the first member 100 and the second member 200. In some embodiments, the first direction D1 may refer to a direction inclined at an angle of about 90° with respect to the boundary line between the first member 100 and the second member 200. The second direction D2 may refer to a direction that is parallel to or perpendicular to the boundary line between the first member 100 and the second member 200. The first direction D1 and the second direction D2 are not limited thereto and may be variously modified as long as the first direction D1 and the second direction D2 are two mutually perpendicular directions. In an embodiment where the second member 200 is supplied with heat higher than a preset temperature, the second member 200 may shrink in the first direction D1 and the second direction D2 perpendicular to the first direction D1 and come into contact with the side surface 13 of the battery 10.

In some embodiments, the first member 100 before being supplied with heat is positioned spaced apart from the first surface 11 of the battery 10, so that a gap may exist between the first member 100 and the first surface 11 of the battery 10. In an embodiment where heat is supplied in this state, the first member 100 may shrink in the first direction D1 and the second direction D2 so that the gap reduces substantially or disappears, allowing the first member 100 to come into contact with the first surface 11 of the battery 10. In some embodiments, it is possible to improve wrinkles caused by a gap between the first member 100 and the first surface 11 of the battery 10 and it is possible to prevent or substantially reduce the chance of the battery 10 moving when the electronic device in which the battery 10 is installed is dropped.

In some embodiments, the second member 200 before being supplied with heat comes into contact with the second surface 12 of the battery 10 and is positioned spaced apart from the side surface 13 of the battery 10, so that a gap may exist between the second member 200 and the side surface 13 of the battery 10. In an embodiment where heat is supplied in this state, the second member 200 may shrink or contract in the first direction D1 and the second direction D2 so that the gap substantially reduces or disappears and the second member 200 may come into contact with the side surface 13 of the battery 10. In some embodiments, it is possible to improve wrinkles caused by a gap between the second member 200 and the side surface 13 of the battery 10 and it is possible to prevent or substantially reduce the chance of the battery 10 moving when the electronic device is dropped.

The first member 100 and the second member 200 may include polycarbonate (PC), polypropylene (PP), polyethylene (PE), or polyethylene terephthalate (PET). The materials of the first member 100 and the second member 200 are not particularly limited as long as the materials shrink upon the application of heat (e.g., are anisotropically heat-shrinkable). A material may be anisotropically heat shrinkable based on the material shrinking unevenly in different directions when heat is applied. For example, the material may shrink or contract more significantly along one axis compared to another, resulting in a non-uniform shrinkage pattern due to its structural properties. In some embodiments, the material shrinks differently depending on which direction heat is applied to it. For example, the first member 100 and the second member 200 may be heat-shrinkable in a temperature range from approximately 60°C to approximately 70°C. In some embodiments, the first member 100 and the second member 200 may be heat-shrinkable in a temperature range from approximately 62°C to approximately 68°C. In some embodiments, the first member 100 and the second member 200 may be heat-shrinkable in a temperature range from approximately 64°C to approximately 66°C.

For example, the first member 100 and the second member 200 may be films that do not shrink at room temperature or at a temperature below approximately 60°C, but may shrink tens to hundreds of times more than a general PET film when a small amount of heat (e.g., heat below a threshold temperature) is applied. A principle behind the shrinkage of the first member 100 and the second member 200 may be that polymers having a chain length of a certain level or longer generate residual stress by elongation, and when a certain amount of heat is supplied while having residual stress, shrinkage may occur to relieve the residual stress.

According to an embodiment, the first member 100 and the second member 200 may be formed to a thickness in a range from approximately 20 µm to approximately 50 µm. In some embodiments, the first member 100 and the second member 200 may be formed to a thickness in a range from approximately 25 µm to approximately 40 µm. In some embodiments, the first member 100 and the second member 200 may be formed to a thickness in a range from approximately 30 µm to approximately 35 µm. In an embodiment where the first member 100 and the second member 200 are supplied with heat above a preset temperature, the first member 100 and the second member 200 may shrink by substantially the same amount in the first direction D1 and the second direction D2 perpendicular to the first direction D1.

The systems and methods according to one or more embodiments of the present disclosure allow the gap between the first member 100 and the first surface 11 of the battery 10 and the gap between the second member 200 and the side surface 13 of the battery 10 to be filled (e.g., substantially evenly filled), to help prevent or substantially reduce the chance of the battery 10 moving when dropped. In some embodiments, the manufacturing process may be simplified because a separate follow-up process to eliminate the gap between the battery and the battery tape may not be needed.

In an embodiment of the present disclosure, a protection circuit module (PCM) 20 may be mounted on one side surface 13 of the battery 10, and the second member 200 may be bonded to at least a portion of the second surface 12 of the battery 10 while surrounding the PCM 20. The PCM may be connected to the battery 10 by welding or soldering, for example, via a conductive nickel plate. The PCM 20 may be joined to a lead of the battery 10 through spot welding or soldering.

The PCM 20 may be electrically connected to the battery 10 and may prevent overheating and explosion caused by overcharge, overdischarge, or overcurrent of the battery 10. The PCM 20 may include safety elements composed of passive elements such as resistors and capacitors, active elements such as field transistors, or protection circuit elements in which integrated circuits may be selectively formed.

The PCM 20 may be positioned on the side surface 13 of the battery 10. The PCM 20 may include a flexible printed circuit board. The flexible circuit board may have a bent shape. The PCM 20 may include a connector connected to an external device on one surface of a lead portion that is drawn out from one side. The PCM 20 may be connected to the external device through the connector. The PCM 20 may transmit electric energy stored in the battery 10 to the external device or may receive a control signal for controlling the operation of the battery 10 from the external device.

In an embodiment where the PCM 20 is in contact with one side surface 13 of the battery 10, the second member 200 may surround the side surface 13 of the battery 10 including the PCM 20. In this state, in an embodiment where heat is supplied to the second member 200, the second member 200 may shrink or contract through anisotropic heat shrinkage.

In an embodiment where the second member 200 is heat-shrunk, the gap on the side surface 13 of the battery 10 may be substantially reduced or it may disappear, allowing the second member 200 to come into contact with one side of the PCM 20. In some embodiments, the PCM 20 may be stably mounted on the side surface 13 of the battery 10.

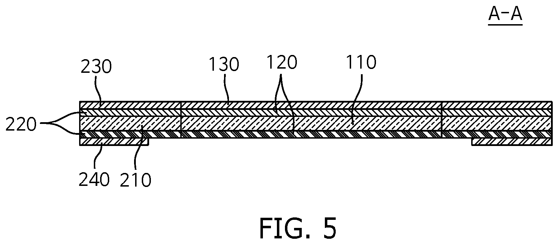

FIG. 5 illustrates a cross-sectional view of a battery tape according to an embodiment of the present disclosure.

Referring to FIG. 5, a first member 100 may include a first base portion 110 and first coating layers 120 stacked on opposite surfaces of the first base portion 110. The first base portion 110 may correspond to an anisotropic heat-shrinkable material. The first member 100 may further include a first printing layer 130 stacked on at least one surface of the first coating layer 120.

The second member 200 may include a second base portion 210 and second coating layers 220 stacked on opposite surfaces of the second base portion 210. The second base portion 210 may correspond to an anisotropic heat-shrinkable material. The second member 200 may further include a second printing layer 230 stacked on at least one surface of the second coating layer 220.

In some embodiments, the second member 200 may further include an adhesive layer 240 formed on at least one surface of the second coating layer 220. The second member 200 may be bonded to the second surface 12 of the battery 10 by the adhesive layer 240. The adhesive layer 240 may be formed (e.g., formed only) in a portion where the second member 200 is bent along the side surface of the battery 10 and comes into contact with the second surface 12. In some embodiments, when the second member 200 is bonded to the second surface 12 of the battery 10, the side surface of the battery 10 may be positioned apart from and without coming into contact with the second member 200.

In some embodiments, the first coating layer 120 and the second coating layer 220 may be formed by low-temperature primer coating. For example, the first coating layer 120 and the second coating layer 220 may be formed at a temperature range from approximately 40°C to approximately 50°C. In some embodiments, the first coating layer 120 and the second coating layer 220 may be formed at a temperature range from approximately 42°C to approximately 48°C. In some embodiments, the first coating layer 120 and the second coating layer 220 may be formed at a temperature range from approximately 44°C to approximately 46°C.

In some embodiments, the first printing layer 130 and the second printing layer 230 may be formed through color printing and ultraviolet (UV) drying. The first printing layer 130 may be formed on a portion of the surface of the first member 100. In some embodiments, the second printing layer 230 may be formed on a portion of the surface of the second member 200.

The adhesive layer 240 may be formed on at least one surface of the second coating layer 220. The adhesive layer 240 may be formed on a portion of the surface of the second coating layer 220 so that the second member 200 may be bonded to the second surface 12 of the battery 10.

The adhesive layer 240 may be used without limitation as long as the adhesive layer 240 is manufactured by using a commonly used adhesive. The adhesive layer 240 may be formed by applying an acrylic adhesive onto the second coating layer 220. The acrylic adhesive may be selected from polymethyl methacrylate (PMMA), polyethyl methacrylate (PEMA), or polybutyl methacrylate (PBMA).

The adhesive layer 240 may be coated onto the second coating layer 220 to various thicknesses by using various known methods. For example, the adhesive layer 240 may be coated at a thickness in a range of approximately 2% to approximately 16% of the total thickness of the second member 200. In some embodiments, the adhesive layer 240 may be coated at a thickness in a range of approximately 4% to approximately 14% of the total thickness of the second member 200. In some embodiments, the adhesive layer 240 may be coated at a thickness in a range of approximately 6% to approximately 12% of the total thickness of the second member 200. In an embodiment, the adhesive layer 240 may be formed by a heat curing method or a UV curing method.

The adhesive layer 240 may be formed on a portion of the surface of the second coating layer 220. The adhesive layer 240 may be formed (e.g., formed only) in the second coating layer 220 of a portion where the second member 200 is bent along the side surface of the battery 10 and comes into contact with the second surface 12.

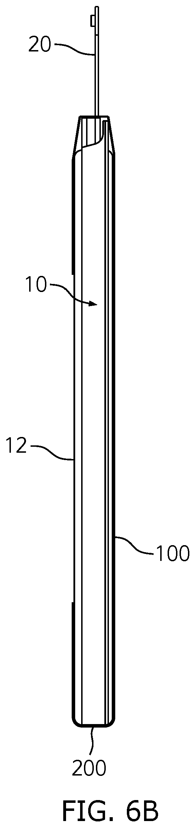

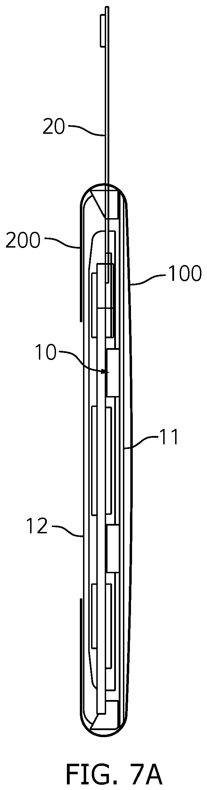

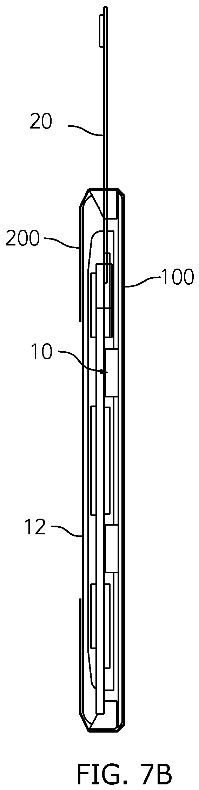

FIG. 6A illustrates a side view in an X-axis direction showing a battery 10 to which a battery tape according to an embodiment of the present disclosure is attached before heat shrinkage, which omits the second member extending in the X-axis direction, and FIG. 6B illustrates a side view in the X-axis direction showing a battery to which a battery tape attached according to an embodiment of the present disclosure is attached after heat shrinkage, which omits the second member extending in the X-axis direction. FIG. 7A illustrates a side view in an Y-axis direction showing a battery to which a battery tape according to an embodiment of the present disclosure is attached before heat shrinkage, which omits the second member extending in the Y-axis direction, and FIG. 7B illustrates a side view in the Y-axis direction showing a battery to which a battery tape attached according to an embodiment of the present disclosure is attached after heat shrinkage, which omits the second member extending in the Y-axis direction.

Referring to FIGS. 6A to 7B, the battery tape including the first member 100 and the second member 200 may eliminate the gap between the battery 10 and the battery tape by anisotropic heat shrinkage.

As shown in FIGS. 6A and 7A, in an embodiment where the first member 100 is positioned on the first surface 11 of the battery 10 and the second member 200 is bonded to the second surface 12 of the battery 10, an open space may be formed between the first member 100 and the first surface 11 of the battery 10 before heat shrinkage. In some embodiments, the open space may be formed between the second member 200 and the side surface 13 of the battery 10 before heat shrinkage.

The open space between the first member 100 and the first surface 11 of the battery 10 and the open space between the second member 200 and the side surface 13 of the battery 10 may cause the battery 10 to separate from an electronic device case or change position within the electronic device case when the electronic device is dropped. Therefore, the battery tape according to an embodiment of the present disclosure is able to fill (i.e. remove or close) the open space, implemented through the first member 100 and the second member 200 using anisotropic heat-shrinkable material, to address the movement of the battery 10 when the electronic device is dropped.

In an embodiment where heat is applied to the first member 100 and the second member 200, as shown in FIGS. 6B and 7B, the first member 100 and the second member 200 may undergo shrinkage (e.g., anisotropic heat shrinkage) to fill (i.e. remove or close) the open space between the first member 100 and the first surface 11 of the battery 10 and the open space between the second member 200 and the side surface 13 of the battery 10.

Before that heat shrinkage treatment, the second member 200 may be bent along the side surface of the battery 10 so that the portion (e.g., only the portion) that comes into contact with the second surface 12 may be bonded. In some embodiments, in an embodiment where the second member 200 is bonded to the second surface 12 of the battery 10, the open space may be formed between the first member 100 and the first surface 11 of the battery 10 and the open space may be formed between the second member 200 and the side surface 13 of the battery 10.

With reference to FIGS. 6A to 7B, in an embodiment where the first member 100 and the second member 200 undergo anisotropic heat shrinkage, the second member 200 may come into contact with the side surface 13 of the battery 10 as the second member 200 is pulled downward from the battery 10.

In an embodiment where the second member 200 is partially bonded to the second surface 12 of the battery 10, the side surface 13 of the battery 10 may be protected by being pulled downward by anisotropic heat shrinkage. By anisotropically heat-shrinking the second member 200 when bonded to at least a portion of the battery 10, the bonding between the battery tape and the battery 10 may be further strengthened.

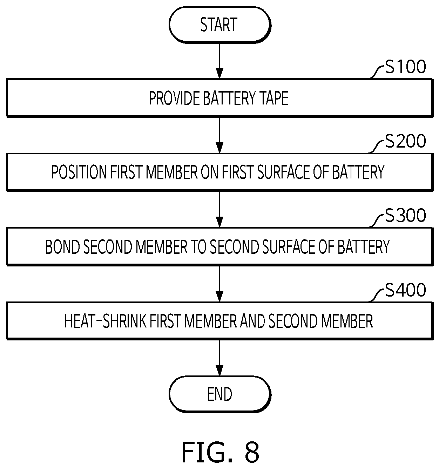

FIG. 8 illustrates a flowchart of an example battery taping method according to an embodiment of the present disclosure.

In an embodiment of the present disclosure, the battery taping method may include providing the battery tape including the first member 100 and the second member 200 (S100), positioning the first member 100 relative to (e.g., on or over) the first surface 11 of the battery 10 (S200), bending the second member 200 along the side surface 13 of the battery 10 and bonding at least a portion of the second member 200 to the second surface 12 of the battery 10 (S300), and heat-shrinking the first member 100 and the second member 200 by applying heat to the first member 100 and the second member 200.

The battery taping method may be initiated by providing the battery tape including the first member 100 and the second member 200 (S100). The first member 100 may correspond to the area of the first surface 11 of the battery 10.

In the operation S100 of providing the battery tape, the first member 100 may include the first base portion 110, the first coating layers 120 stacked on opposite surfaces of the first base portion 110, and the first printing layer 130. The second member 200 may include the second base portion 210, the second coating layers 220 stacked on opposite surfaces of the second base portion 210, the second printing layer 230, and the adhesive layer 240.

In the operation S100 of providing the battery tape, the first base portion 110 and the second base portion 210 may be provided with an anisotropic heat-shrinkable material. After the first base portion 110 and the second base portion 210 are prepared, the first coating layer 120 and the second coating layer 220 may be formed on the first base portion 110 and the second base portion 210 by low-temperature primer coating. For example, the low-temperature primer coating may be performed at a temperature range from approximately 40°C to approximately 50°C. In some embodiments, the low-temperature primer coating may be performed at a temperature range from approximately 42°C to approximately 48°C. In some embodiments, the low-temperature primer coating may be performed at a temperature range from approximately 44°C to approximately 46°C.

The low-temperature primer coating may be performed prior to heat shrinkage treatment. The term "low temperature" may mean a temperature lower than a process temperature of the heat shrinkage treatment.

The first printing layer 130 may be formed on a portion of the surface of the first coating layer 120. In some embodiments, the second printing layer 230 may be formed on a portion of the surface of the second coating layer 220. For example, the first printing layer 130 and the second printing layer 230 may be formed through color printing and UV drying. In an embodiment of the present disclosure, the first printing layer 130 and the second printing layer 230 may have color. For example, the color may be dark gray.

The adhesive layer 240 may be formed on at least one surface of the second coating layer 220. For example, by heat-treating the second surface 12 of the battery 10 at a temperature of approximately 50°C or less for 48 hours, the second member 200 may be bonded to the battery 10 through the adhesive layer 240.

In the operation S100 of providing the battery tape, the adhesive layer 240 may be manufactured by using a commonly used adhesive. The adhesive layer 240 may be formed by applying an acrylic adhesive onto the second coating layer 220. In some embodiments, the acrylic adhesive may be selected from PMMA, PEMA, or PBMA.

The adhesive layer 240 may be coated onto the second coating layer 220 to various thicknesses by using various known methods. For example, the adhesive layer 240 may be formed by coating the adhesive using knife coating at approximately 2% to approximately 16% of the total thickness of the second member 200.

In the operation S200 of positioning the first member 100 on the first surface 11 of the battery 10, the first member 100 may be positioned to face the first surface 11 of the battery 10. In the operation S200 of positioning the first member 100 on the first surface 11 of the battery 10, the second member 200 may be positioned in a state of being spread out toward the outside of the side surface 13 of the battery 10.

In the operation S300 of bending the second member 200 along the side surface 13 of the battery 10 and bonding at least a portion of the second member 200 to the second surface 12 of the battery 10, the second member 200 may extend from the side of the first member 100 and surround the side surface 13 of the battery 10. The second member 200 may be folded toward the side surface 13 of the battery 10.

The second member 200 may be bent along the side surface 13 of the battery 10 so that at least a portion thereof is bonded to a second surface 12 of the battery 10. The second member 200 may extend from four sides of the first member 100 and surround four side surfaces 13 of the battery 10.

In the operation S300 of bonding a portion of the second member 200 to the second surface 12 of the battery 10, the second member 200 may be bonded to at least a portion of the second surface 12 of the battery 10. The second member 200 may be bonded to the second surface 12 of the battery 10 so as not to come into contact with each other.

For example, the second member 200 may have a plurality of round corners and may have a shape that becomes narrower as the distance from the side of the first member 100 increases. In the operation S300 of bonding a portion of the second member 200 to the second surface 12 of the battery 10, the corners of the second member 200 may maintain a state of being spaced apart from each other.

The operation S400 of heat-shrinking the first member 100 and the second member 200 may include, in an embodiment where the first member 100 is supplied with heat above a preset temperature when the first member is positioned spaced apart from the first surface 11 of the battery 10, shrinking the first member 100 in the first direction D1 and the second direction D2 perpendicular to the first direction D1 and bringing the first member 100 into contact with the first surface 11 of the battery 10.

For example, the heat-shrinking operation S400 may include, in an embodiment where the second member 200 is supplied with heat above a preset or threshold temperature in a state of being bent along the side surface 13 of the battery 10 so that at least a portion thereof is bonded to the second surface 12 of the battery 10, shrinking the second member 200 in the first direction D1 and the second direction D2 perpendicular to the first direction D1 and bringing the second member 200 into contact with the side surface 13 of the battery 10.

The heat-shrinking operation S400 may be performed at a temperature range from approximately 60°C to approximately 70°C. In an embodiment where heat is supplied to the first member 100 and the second member 200 in the heat-shrinking operation S400, the first member 100 and the second member 200 may undergo anisotropic heat shrinkage.

In an embodiment where the first member 100 is supplied with or exposed to heat while being positioned spaced apart from the first surface 11 of the battery 10, the first member 100 may shrink in a first direction D1 and a second direction D2 perpendicular to the first direction D1 and come into contact with the first surface 11 of the battery 10. In an embodiment where the second member 200 is supplied with or exposed to heat higher than a preset threshold temperature, the second member 200 may shrink in the first direction D1 and the second direction D2 perpendicular to the first direction D1 and come into contact with the side surface 13 of the battery 10.

In the heat-shrinking operation S400, the first member 100 and the second member 200 may be formed to a thickness having a range from approximately 20 micrometers to approximately 30 micrometers. The heat-shrinking operation S400 may include, in an embodiment where the first member 100 and the second member 200 are supplied with or are exposed to heat above a preset or threshold temperature, shrinking the first member 100 and the second member 200 by the same amount in the first direction D1 and the second direction D2 perpendicular to the first direction D1.

In the heat-shrinking operation S400, the first member 100, before receiving heat, may be positioned spaced apart from the first surface 11 of the battery 10. In an embodiment where heat is supplied in this state, the first member 100 may shrink in the first direction D1 and the second direction D2 so that the gap substantially reduces or disappears, and the first member 100 comes into contract with the first surface 11 of the battery 10.

In the heat-shrinking operation S400, a portion of the second member 200 before receiving heat may come in contact with the second surface 12 of the battery 10 and the second member 200 may be spaced apart from the side surface 13 of the battery 10. In an embodiment where heat is supplied in this state, the second member 200 may shrink in the first direction D1 and the second direction D2 so that the gap substantially reduces or disappears, and the second member 200 may come into contact with the side surface 13 of the battery 10.

In the heat-shrinking operation S400, the first member 100 and the second member 200 that are supplied with heat may shrink by the same amount in the first direction D1 and the second direction D2 perpendicular to the first direction D1. In some embodiments, the gap between the first member 100 and the first surface 11 of the battery 10 and the gap between the second member 200 and the side surface 13 of the battery 10 are filled (e.g., substantially evenly filled), to help prevent or substantially reduce the chance of the battery 10 moving when dropped.

The flowchart of FIG. 8 and the above description are only examples of the present disclosure, and the scope of the present disclosure is not limited to the flowchart of FIG. 8 and the above description. For example, one or more steps in the flowchart and the above description may be added/changed/deleted, the order of one or more steps may be changed, and one or more steps may be performed simultaneously.

Embodiments are set out in the following clauses:
Clause 1. A battery tape comprising:
   a first member positioned on a first surface of a battery; and
   a second member configured to extend from a side of the first member, surround a side surface of the battery, and be bonded to a second surface of the battery facing the first surface,
   wherein the first member is anisotropically heat-shrunk and comes into contact with the first surface of the battery, and the second member is anisotropically heat-shrunk and comes into contact with the side surface of the battery.
Clause 2. The battery tape according to clause 1, wherein the first member comprises a first base portion and first coating layers stacked on opposite surfaces of the first base portion, and the first base portion corresponds to an anisotropic heat-shrinkable material.
Clause 3. The battery tape according to clause 2, wherein the first member further comprises a first printing layer stacked on at least one surface of the first coating layer.
Clause 4. The battery tape according to any one of the preceding clauses, wherein the second member comprises a second base portion and second coating layers stacked on opposite surfaces of the second base portion, and the second base portion corresponds to an anisotropic heat-shrinkable material.
Clause 5. The battery tape according to clause 4, wherein the second member further comprises a second printing layer stacked on at least one surface of the second coating layer.
Clause 6. The battery tape according to clause 4 or clause 5, wherein the second member further comprises an adhesive layer formed on at least one surface of the second coating layer, and the second member is bonded to the second surface by the adhesive layer.
Clause 7. The battery tape according to any one of the preceding clauses, wherein, in a case of being supplied with heat in a state of being positioned spaced apart from the first surface of the battery, the first member shrinks by the same amount in a first direction and a second direction perpendicular to the first direction and comes into contact with the first surface of the battery.
Clause 8. The battery tape according to any one of the preceding clauses, wherein the second member is bent along the side surface of the battery so that at least a portion thereof is bonded to the second surface of the battery.
Clause 9. The battery tape as claimed in clause 8, wherein, in a case of being supplied with heat, the second member shrinks by the same amount in a first direction and a second direction perpendicular to the first direction and comes into contact with the side surface of the battery.
Clause 10. The battery tape according to any one of the preceding clauses, wherein a protection circuit module is mounted on one side surface of the battery, and the second member is bonded to at least a portion of the second surface of the battery in a state of surrounding the protection circuit module.
Clause 11. The battery tape according to any one of the preceding clauses, wherein the first member and the second member comprises polycarbonate (PC), polypropylene (PP), polyethylene (PE), or polyethylene terephthalate (PET).
Clause 12. The battery tape according to any one of the preceding clauses, wherein the first member and the second member are heat-shrinkable in a temperature range of 60°C to 70°C.
Clause 13. The battery tape according to any one of the preceding clauses, wherein the first member and the second member are formed to a thickness of 20 µm to 50 µm and shrink by the same amount in a first direction and a second direction perpendicular to the first direction in a case where heat is supplied.
Clause 14. The battery tape according to any one of the preceding clauses, wherein four second members are formed by extending from four sides of the first member, and the second members are not in contact with each other in a state of being bonded to the second surface of the battery.
Clause 15. A battery taping method comprising:
   providing a battery tape including a first member and a second member;
   positioning the first member on a first surface of a battery;
   bending the second member along a side surface of the battery and bonding at least a portion of the second member to a second surface of the battery; and
   heat-shrinking the first member and the second member,
   wherein the first member is anisotropically heat-shrunk and comes into contact with the first surface of the battery, and the second member is anisotropically heat-shrunk and comes into contact with the side surface of the battery.
Clause 16. The battery taping method according to clause 15, wherein, in the bonding of the second member, the second member is bonded to the second surface of the battery is bonded not to come into contact with each other.
Clause 17. The battery taping method according to clause 15 or clause 16, wherein the heat-shrinking comprises, in a case of being supplied with heat in a state of being positioned spaced apart from the first surface of the battery, shrinking the first member by the same amount in a first direction and a second direction perpendicular to the first direction and brining the first member into contact with the first surface of the battery.
Clause 18. The battery taping method according to any one of clauses 15 to 17, wherein the heat-shrinking comprises, in a case where the second member is supplied with heat above a preset temperature in a state of being bent along the side surface of the battery so that at least a portion thereof is bonded to the second surface of the battery, shrinking the second member in a first direction and a second direction perpendicular to the first direction and brining the second member into contact with the side surface of the battery.
Clause 19. The battery taping method according to any one of clauses 15 to 18, wherein the heat-shrinking operation is performed at a temperature range of 60°C to 70°C.
Clause 20. The battery taping method according to any one of clauses 15 to 19, wherein, in the heat-shrinking, the first member and the second member are formed to a thickness of 20 µm to 50 µm and shrink by the same amount in a first direction and a second direction perpendicular to the first direction in a case where heat is supplied.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

### DESCRIPTION OF SOME REFERENCE SYMBOLS

- 100:: first member
- 110:: first base portion
- 120:: first coating layer
- 130:: first printing layer
- 200:: second member
- 210:: second base portion
- 220:: second coating layer
- 230:: second printing layer
- 240: : adhesive layer

## Claims

1. A battery tape comprising:
a first member (100) having a position relative to a first surface (11) of a battery (10); and
a second member (200) extending from a side of the first member (100), surrounding a side surface of the battery (10), and bonded to a second surface (12) of the battery (10) opposite to the first surface (11),
wherein the first member (100) is configured to shrink and contact the first surface (11) of the battery (10) based on exposing the first member (100) to first heat, and the second member (200) is configured to shrink and contact the side surface (13) of the battery (10) based on exposing the second member (200) to second heat.

2. The battery tape as claimed in claim 1, wherein the first member (100) comprises a first base portion (110) and first coating layers (120) stacked on opposite surfaces of the first base portion (110), and the first base portion (110) includes an anisotropic heat-shrinkable material configured to anisotropically heat-shrink based on being exposed to the first heat.

3. The battery tape as claimed in claim 2, wherein the first member (100) further comprises a first printing layer (130) stacked on at least one surface of one of the first coating layers (120).

4. The battery tape as claimed in any one of the preceding claims, wherein the second member (200) comprises a second base portion (210) and second coating layers (220) stacked on opposite surfaces of the second base portion (210), and the second base portion (210) includes an anisotropic heat-shrinkable material configured to anisotropically heat-shrink based on being exposed to the second heat.

5. The battery tape as claimed in claim 4, wherein the second member (200) further comprises a second printing layer (230) stacked on at least one surface of one of the second coating layers (220).

6. The battery tape as claimed in claim 4 or claim 5, wherein the second member (200) further comprises an adhesive layer (240) formed on at least one surface of one of the second coating layers (220), and the second member (200) is configured to bond to the second surface (12) by the adhesive layer (240).

7. The battery tape as claimed in any one of the preceding claims, wherein based on the first member (100) being exposed to the first heat with the first member (100) spaced apart from the first surface (11) of the battery (10), the first member (100) is configured to shrink in a first direction and a second direction perpendicular to the first direction for contacting the first surface (11) of the battery (10).

8. The battery tape as claimed in any one of the preceding claims, wherein the second member (200) includes a bent portion along the side surface (13) of the battery (10), wherein at least a portion of the bent portion is configured to bond to the second surface (12) of the battery (10).

9. The battery tape as claimed in claim 8, wherein based on the second member (200) being exposed to the second heat, the second member (200) is configured to shrink in a first direction and a second direction perpendicular to the first direction for contacting the side surface (13) of the battery (10).

10. The battery tape as claimed in any one of the preceding claims, wherein a protection circuit module is mounted on one side surface (13) of the battery (10), and the second member (200) is configured to bond to at least a portion of the second surface (12) of the battery (10) and surround the protection circuit module (20).

11. The battery tape as claimed in any one of the preceding claims, wherein the first member (100) and the second member (200) comprises at least one of polycarbonate (PC), polypropylene (PP), polyethylene (PE), or polyethylene terephthalate (PET).

12. The battery tape as claimed in any one of the preceding claims, wherein the first heat or the second heat is in a temperature range from approximately 60°C to approximately 70°C.

13. The battery tape as claimed in any one of the preceding claims, wherein the first member 100 and the second member (200) have a thickness in a range from approximately 20 µm to approximately 50 µm, and are configured to shrink by substantially a same amount in a first direction and a second direction perpendicular to the first direction based on being exposed to respectively the first heat and the second heat.

14. The battery tape as claimed in any one of the preceding claims, wherein four second members (200) extend from four sides of the first member (100), wherein the second members (200) are separated from each other and configured to bond to the second surface (12) of the battery (10).

15. A battery taping method comprising:
providing a battery tape including a first member (100) and a second member (200);
positioning the first member (100) relative to a first surface (11) of a battery;
bending the second member (200) along a side surface (13) of the battery (10) and bonding at least a portion of the second member (200) to a second surface (12) of the battery (10); and
shrinking the first member (100) and the second member (200) via heat,
wherein the first member (100) shrinks and contacts the first surface (11) of the battery (10) based on the first member (100) being exposed to first heat, and the second member (200) shrinks and contacts the side surface (13) of the battery (10) based on the second member (200) being exposed to second heat.
